Europäisches Patentamt

European Patent Office

Office européen des brevets

(19)

(11) **EP 1 413 105 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(21) Anmeldenummer: 02760091.5

(22) Anmeldetag: **12.07.2002**

(51) Int Cl.⁷: **H04L 25/02**, H04L 25/06

(86) Internationale Anmeldenummer:
**PCT/DE2002/002560**

(87) Internationale Veröffentlichungsnummer:
**WO 2003/017606 (27.02.2003 Gazette 2003/09)**

(54) **VERFAHREN ZUR GEMEINSAMEN ABSCHÄTZUNG VON DC-STÖRUNG UND KANAL IN EINEM DIGITALEN BASISBANDSIGNAL EINES FUNKEMPFÄNGERS UND ZUGEHÖRIGE VORRICHTUNG**

METHOD FOR COMMON ESTIMATION OF DC DISTURBANCE AND CHANNEL IN A DIGITAL BASEBAND SIGNAL OF A RADIO RECEIVER AND CORRESPONDING DEVICE

PROCEDE D'EVALUATION COMMUNE DE PERTURBATION EN COURANT CONTINU ET DE CANAL DANS UN SIGNAL DE BANDE DE BASE NUMERIQUE D'UN RECEPTEUR RADIO ET DISPOSITIF ASSOCIE

(84) Benannte Vertragsstaaten:
**DE FR GB IT**

(30) Priorität: **01.08.2001 DE 10137675**

(43) Veröffentlichungstag der Anmeldung:
**28.04.2004 Patentblatt 2004/18**

(73) Patentinhaber: **Infineon Technologies AG**
**81669 München (DE)**

(72) Erfinder: **YANG, Bin**
**81735 München (DE)**

(74) Vertreter: **Graf Lambsdorff, Matthias, Dr. et al**
**Lambsdorff & Lange,**
**Patentanwälte,**
**Dingolfinger Strasse 6**
**81673 München (DE)**

(56) Entgegenhaltungen:
WO-A-01/06683          WO-A-01/31867
WO-A-98/25351

- **KAMMEYER, KARL DIRK: "Nachrichtenübertragung" 1996 , TEUBNER , STUTTGART XP002219867 in der Anmeldung erwähnt Seite 588-592**
- **LINDOFF BENGT: "Using a direct conversion receiver in EDGE terminals-a new DC offset compensation algorithm" IEEE INTERNATIONAL SYMPOSIUM ON PERSONAL, INDOOR AND MOBILE RADIO COMMUNICATIONS, XX, XX, 18. September 2000 (2000-09-18), Seiten 959-963, XP002198497 in der Anmeldung erwähnt**

**Beschreibung**

Verfahren zur gemeinsamen Abschätzung von DC-Störung und Kanal in einem digitalen Basisbandsignal eines Funkempfängers und zugehörige Vorrichtung

Die Erfindung betrifft ein Verfahren, welches zur Abschätzung einer DC-Störung und zur gleichzeitigen Kanalschätzung in einem digitalen Basisbandsignal eines Funkempfängers dient.

Ein Problem beim Betrieb von Funkempfängern stellen durch den Übertragungskanal eingebrachte Intersymbolinterferenzen dar. Die durch die Intersymbolinterferenzen verursachten Kanalverzerrungen können unter ungünstigen Übertragungsbedingungen so stark werden, dass eine korrekte Datenentscheidung nicht mehr möglich ist.

Die Kanalentzerrung erfolgt bei Zeitmultiplex-Verfahren (TDMA; Time Division Multiple Access), wie zum Beispiel GSM (Global System for Mobile Communications) oder EDGE (Enhanced Data Rates for GSM Evolution), mittels sogenannter Trainingssequenzen. Bei einem Zeitmultiplex-Verfahren werden die die Informationen tragenden Datensymbole in aufeinanderfolgenden Datenbursts übertragen. Zur Durchführung einer Kanalschätzung und anschließenden Kanalentzerrung enthält jeder Datenburst zusätzlich eine Trainingssequenz, welche jeweils eine vorgegebene pseudozufällige Datenfolge aufweist. Die Trainingssequenzen sind ebenfalls empfängerseitig in einem Speicher abgelegt. Der Funkempfänger kann daher die vom Funksender empfangenen Trainingssequenzen und die aus dem Speicher bezogenen Trainingssequenzen zur Kanalschätzung heranziehen. Die Kanalschätzung erfolgt durch die Berechnung sogenannter Kanalparameter. In einem Kanalentzerrer werden die Kanalparameter dazu verwendet, um aus den von dem Funkempfänger empfangenen Signalen die vom Funksender ausgesandten Datensymbole zu rekonstruieren.

Ein weiteres Problem beim Betrieb von Funkempfänger besteht darin, dass im Funkempfänger aus unterschiedlichen Gründen Gleichanteile im empfangenen Signal auftreten. Diese Gleichanteile werden im Folgenden gemäß üblichem Sprachgebrauch als DC-Offset (Direct Current) oder als DC-Störung bezeichnet. Die DC-Störung lässt sich auch bei hochwertigen Funkempfängern nicht völlig eliminieren und muss daher bei der Basisbandsignalbearbeitung geschätzt und korrigiert werden. Ansonsten würde die DC-Störung die Entzerrung des Empfangssignals beeinträchtigen und zu einer erhöhten Bitfehlerrate im Funkempfänger führen.

Der einfachste Ansatz zur Abschätzung der DC-Störung besteht in einer Mittelung über die Basisbandsymbole mehrerer Datenbursts. Dieses Verfahren führt jedoch oftmals bei einer sich mit jedem Datenburst ändernden DC-Störung zu sehr ungenauen Ergebnissen. Besonders bei Frequenzsprungverfahren ist dieses der Fall. Bei Frequenzsprungverfahren muss die DC-Störung daher für jeden Datenburst einzeln abgeschätzt werden. Jedoch ist es zum Beispiel beim GMSK-Verfahren (Gaussian Minimum Shift Keying) und beim 8-PSK-Verfahren (Phase Shift Keying) nicht möglich, die DC-Störung durch Mittelung über nur einen Datenburst abzuschätzen, da eine Mittelung über nur wenige Basisbandsymbole bei diesen Verfahren generell nicht gleich Null ist. Es kann folglich nicht zwischen einer inhärent auftretenden Abweichung des Mittelwerts von dem Nullpunkt und einer DC-Störung, die durch den Empfänger verursacht wurde, unterschieden werden.

Ein weiterer Ansatz zur Abschätzung der DC-Störung ist die Darstellung der Basisbandsymbole als ein Kreis in der komplexen Zahlenebene. Eine DC-Störung verursacht hierbei eine Verschiebung des Kreismittelpunkts. Diese Verschiebung kann festgestellt werden, indem aus den empfangenen Basisbandsymbolen der zugehörige Kreis mittels eines Least-Squares-Verfahrens ermittelt wird. Nachteilig an diesem Ansatz ist, dass er nicht auf das 8-PSK-Verfahren, das z.B. in EDGE-Empfängern eingesetzt wird, anwendbar ist.

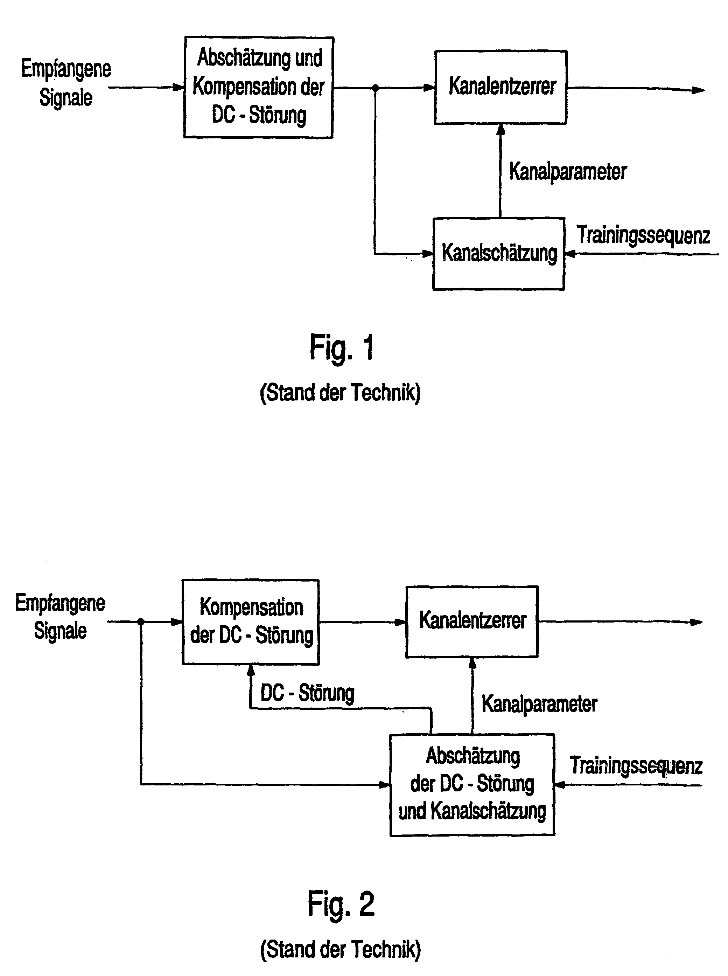

In Fig. 1 ist der Ablauf eines herkömmlichen Verfahrens zur Kompensation der DC-Störung und zur Kanalentzerrung schematisch dargestellt. Dabei wird zunächst die DC-Störung der in den Funkempfänger eingegangenen Signale abgeschätzt und diese anschließend kompensiert. Danach werden anhand der Signale, die nun nicht mehr mit einer DC-Störung behaftet sind, und der Trainingssequenz die Kanalparameter berechnet. Die Kanal-Parameter werden einem Kanalentzerrer zugeführt, welcher die Kanalentzerrung durchführt.

In Fig. 2 ist ein weiteres, ebenfalls bekanntes Verfahren zur Kompensation der DC-Störung und zur Kanalentzerrung schematisch gezeigt, welches in dem Artikel "Using a direct conversion receiver in EDGE terminals: A new DC offset compensation algorithm" von B. Lindoff, erschienen in der Zeitschrift Proc. IEEE PIMRC, 2000, Seiten 959-963, beschrieben ist. Mittels dieses Verfahrens können die Abschätzung der DC-Störung sowie die Kanalschätzung gleichzeitig durchgeführt werden. Die Grundidee des Verfahrens ist es, die DC-Störung als einen zusätzlichen unbekannten Parameter in dem zugrundeliegenden Kanalmodell anzusehen und die Abschätzung der DC-Störung in die Kanalschätzung miteinzubeziehen. Anschließend werden die derart ermittelte DC-Störung bzw. die Kanalparameter einer Einheit zur Kompensation der DC-Störung bzw. einem Kanalentzerrer zugeführt. Die gemeinsame Abschätzung der DC-Störung mit der Kanalschätzung lässt sich auf alle Modulationsarten anwenden. Nachteilig an diesem Verfahren nach B. Lindoff ist allerdings der große Festwertspeicherbedarf sowie der hohe rechnerische Aufwand.

In der Druckschrift WO 98/25351 A wird ein Verfahren zur Abschätzung einer DC-Störung und zur Kanalschätzung in einem digitalen Basisbandsignal eines Funkempfängers beschrieben. Bei diesem Verfahren werden in einem ersten Schritt Kanalparameter mittels eines Least-Squares-Verfahrens berechnet, wobei eine dem Funkempfänger bekannte Trainingssequenz verwendet wird und die DC-Störung vernachlässigt wird. In einem zweiten Schritt wird eine Abschätzung der DC-Störung durchgeführt und es werden unter Berücksichtigung der DC-Störung Korrekturterme für die im ersten Schritt errechneten Kanalparameter berechnet.

Die Druckschrift WO 01/06683 A1 beschreibt einen Kanalschätzer für ein Kommunikationssystem unter Verwendung von Pilotsymbolen. In einem Modell des Übertragungssystems werden die Signale zuerst durch Pulsformungsfilter des Senders und des Empfängers und dann durch den physikalischen Kanal übertragen. Ein Least-Squares-Verfahren wird dann verwendet, um die Impulsantwort des Kanals aus den empfangenen Pilotsymbolen und den bekannten Impulsantworten der Pulsformungsfilter zu schätzen.

Der Erfindung liegt daher die Aufgabe zugrunde, ein Verfahren zur Abschätzung der DC-Störung und zur Kanalschätzung anzugeben, welches einen verringerten Speicherbedarf sowie Rechenaufwand aufweist.

Die der Erfindung zugrundeliegende Aufgabenstellung wird durch ein Verfahren mit den Merkmalen des Patentanspruchs 1 gelöst. Vorteilhafte Weiterbildungen und Ausgestaltungen sind in den Unteransprüchen angegeben.

Der Grundgedanke der Erfindung besteht wie in der Druckschrift WO 98/25351 A darin, ein Verfahren zur Abschätzung einer DC-Störung und zur Kanalschätzung in einem digitalen Basisbandsignal eines Funkempfängers in zwei Schritte zu unterteilen. In einem ersten Schritt wird eine Berechnung von Kanalparametern zur Kanalschätzung mittels eines Least-Squares-Verfahrens durchgeführt. Bei dieser Berechnung wird eine dem Funkempfänger bekannte Trainingssequenz verwendet und es wird des Weiteren angenommen, dass die DC-Störung gleich Null sei.

In einem zweiten Schritt erfolgen die Abschätzung der DC-Störung und die eigentliche Kanalschätzung. Für die Kanalschätzung werden unter Berücksichtigung der DC-Störung Korrekturen für die im ersten Schritt errechneten Kanalparameter berechnet. Vorteilhafterweise sind die Korrekturen für die Kanalparameter lineare Funktionen der DC-Störung.

Das erfindungsgemäße Verfahren liefert die gleichen Ergebnisse für die Abschätzung der DC-Störung und für die Kanalschätzung wie das vorstehend zitierte Verfahren von B. Lindoff. Jedoch werden für das erfindungsgemäße Verfahren wesentlich weniger Festwertspeicher und Rechenkapazität benötigt. Der Grund hierfür ist, dass den Rechenoperationen des ersten Schritts des erfindungsgemäßen Verfahrens eine reelle Matrix zugrunde liegt. Im Gegensatz dazu muss bei dem Verfahren nach B. Lindoff durchgängig mit komplexen Zahlen gerechnet werden, wodurch sich für das Verfahren nach B. Lindoff ein wesentlich größerer Speicherbedarf und höherer Rechenaufwand ergibt.

Das erfindungsgemäße Verfahren weist als weiteren Vorteil gegenüber anderen, dem gleichen Zweck dienenden Verfahren auf, dass es für sämtliche Modulationsarten, wie z.B. GMSK oder 8-PSK, einsetzbar ist.

Die Erfindung wird nachfolgend in beispielhafter Weise unter Bezugnahme auf die Zeichnungen näher erläutert. Diese zeigen:

Fig. 1    eine schematische Darstellung eines herkömmlichen Verfahrens zur Kompensation einer DC-Störung und zur Kanalentzerrung;

Fig. 2    eine schematische Darstellung eines weiteren herkömmlichen Verfahrens zur Kompensation einer DC-Störung und zur Kanalentzerrung;

Fig. 3    eine schematische Darstellung eines Datenbursts mit einer Trainingssequenz; und

Fig. 4    ein schematisches Schaubild zur Verdeutlichung des erfindungsgemäßen Verfahrens.

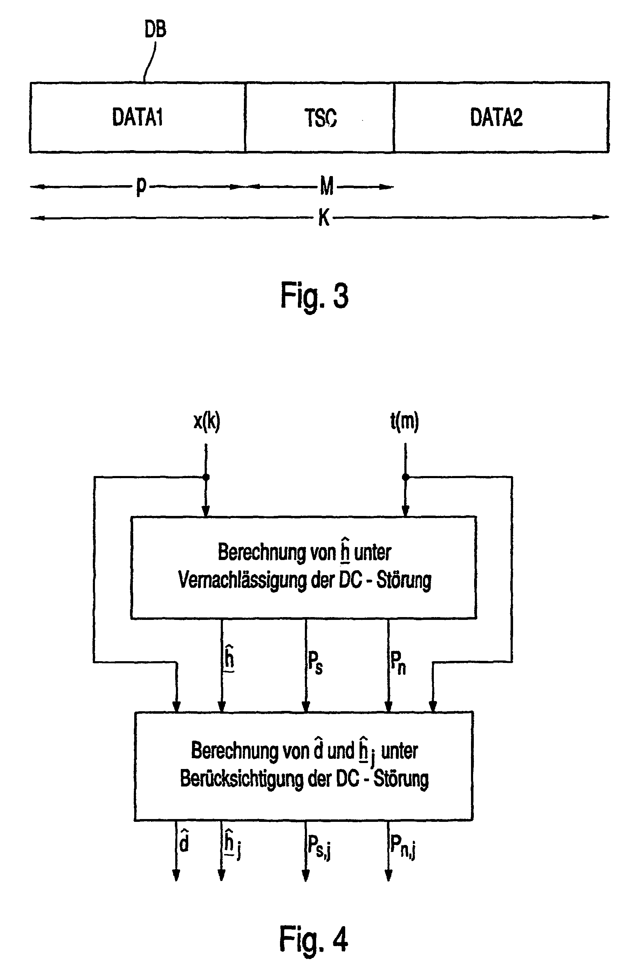

In Fig. 3 ist ein Datenburst DB gezeigt, welcher K Datensymbole enthält. Der Datenburst DB wird von einem Funksender ausgesandt und von einem Funkempfänger empfangen. Zu Beginn des Datenbursts DB werden p Datensymbole DATA1 übertragen. Nachfolgend werden M Datensymbole einer Trainingssequenz TSC übertragen und anschließend K-p-M Datensymbole DATA2. Die Datensymbole DATA1 und DATA2 enthalten die zu übertragenden Nutzdaten.

Sofern sich die Trainingssequenz TSC genau in der Mitte des Datenbursts DB befindet, beträgt die Anzahl p der Datensymbole DATA1 und DATA2 jeweils (K-M)/2. In der Praxis kann es allerdings zu Abweichungen von diesem idealen Wert für p aufgrund von Synchronisationsfehlern kommen.

Die Datensymbole des Datenbursts DB sind nach dem Empfang im Funkempfänger mit einer DC-Störung sowie Verzerrungen, die durch Intersymbolinterferenzen verursacht wurden, behaftet. Zur Entzerrung der Nutzdaten, welche durch die Datensymbole DATA1 und DATA2 übertragen werden, wird die Trainingssequenz TSC verwendet. Die Trainingssequenz TSC enthält eine vorab vereinbarte pseudozufällige Datenfolge, die sowohl dem Funksender als auch dem Funkempfänger bekannt ist. Dadurch kann die Trainingssequenz TSC zur Berechnung der Kanalverzerrungen herangezogen werden.

Die ursprünglichen, im Funksender vorliegenden Datensymbole des Datenbursts DB sind mit $s(k)$ ($k = 0, 1,...,$ K-1) bezeichnet, wobei $k$ einen Nummerierungsindex für jedes zu übertragende Datensymbol $s(k)$ darstellt. Aufgrund der zeitlichen Abfolge der sukzessiven Übertragung der Datensymbole s(k) entspricht k auch dem Zeitpunkt, zu welchem die Übertragung des Datensymbols s(k) erfolgt. Die Datensymbole s(k) umfassen sowohl die Datensymbole DATA1 und DATA2 als auch die Datensymbole der Trainingssequenz TSC.

Vor der Versendung des Datenbursts DB werden die Datensymbole s(k) in einem Modulator mit dem Phasenwinkel Φ in gedrehte Datensymbole $\tilde{s}(k)$ transformiert:

$$\tilde{s}(k) = s(k) \cdot e^{j\Phi k} \qquad\qquad \text{mit } k = 0, 1,\ldots, K-1 \qquad (1)$$

Der Phasenwinkel Φ ist dabei abhängig von dem verwendeten Modulationsverfahren. Beispielsweise beträgt er für das GMSK-Verfahren π/2 und für das 8-PSK-Verfahren 3π/8. Die Datensymbole s(k) im GMSK-Verfahren nehmen die Werte -1 oder +1 an. Beim 8-PSK-Verfahren sind die Datensymbole s(k) in der Regel komplex, während die Werte der Trainingssequenz TSC auf die Werte -1 und +1 beschränkt sind.

Von dem Funkempfänger werden durch den Datenburst DB Datensymbole $\tilde{x}(k)$ empfangen:

$$\tilde{x}(k) = \sum_{i=0}^{L} \tilde{h}_i \cdot \tilde{s}(k - i) + \tilde{d} + \tilde{n}(k) \qquad\qquad (2)$$

Gleichung (2) liegt ein Kanalmodell zugrunde, nach welchem die gedrehten Datensymbole $\tilde{s}(k)$ in dem Übertragungskanal interferieren. Daraus ergibt sich die Summe im ersten Term von Gleichung (2). L steht hierbei für die Kanalordnung und $\tilde{h}_i$ für die Kanalparameter. Des Weiteren wird in dem Kanalmodell eine DC-Störung $\tilde{d}$ berücksichtigt. Außerdem sind die Datensymbole $\tilde{x}(k)$ mit einem durch die Übertragung erzeugten additiven Rauschanteil ñ(k) behaftet.

Nach dem Empfang der Datensymbole $\tilde{x}(k)$ werden diese mittels des Phasenwinkels Φ in zurückgedrehte Datensymbole x(k) zurücktransformiert:

$$x(k) = \tilde{x}(k) \cdot e^{-j\Phi k} \qquad\qquad (3)$$

Aus einer Kombination der Gleichungen (1),(2) und (3) ergibt sich für die zurückgedrehten Datensymbole x(k) folgende Gleichung:

$$x(k) = \sum_{i=0}^{L} h_i \cdot s(k - i) + \tilde{d} \cdot e^{-j\Phi k} + n(k), \qquad\qquad (4)$$

wobei die zurückgedrehten Kanalparameter $h_i$ und die zurückgedrehten Rauschanteile n(k) durch Gleichungen (5) und (6) gegeben sind:

$$h_i = \tilde{h}_i \cdot e^{-j\Phi i} \qquad\qquad (5)$$

$$n(k) = \tilde{n}(k) \cdot e^{-j\Phi k} \qquad\qquad (6)$$

Die Datensymbole aus der Menge der Datensymbole s(k), die zu der Trainingssequenz TSC gehören, sind mit t(m) (m = 0, 1,..., M-1) bezeichnet. Es gilt:

$$t(m) = s(p + m) \qquad \text{mit } m = 0, 1,..., M-1 \tag{7}$$

Die Datensymbole t(m) der Trainingssequenz TSC werden ebenfalls wie die Nutzdaten bei der Funkübertragung durch Intersymbolinterferenzen und DC-Störungen verfälscht. Nach der Zurückdrehung im Funkempfänger lassen sich die im Funkempfänger vorliegenden zurückgedrehten Datensymbole x(p + m) der Trainingssequenz TSC durch folgende Gleichung beschreiben:

$$x(p + m) = \sum_{i=0}^{L} h_i \cdot t(m - i) + d \cdot e^{-j\Phi m} + n(p + m) \tag{8}$$

Hierbei ist eine zurückgedrehte DC-Störung d durch Gleichung (9) definiert:

$$d = \tilde{d} \cdot e^{-j\Phi p} \tag{9}$$

Während die ursprünglichen Datensymbole t(m) der Trainingssequenz TSC aus der Menge der reellen Zahlen -1 und +1 hervorgehen, weisen die vom Funkempfänger empfangenen und zurückgedrehten Datensymbole x(p + m) der Trainingssequenz TSC komplexe Zahlen auf. Jedoch sind die ursprünglichen Datensymbole t(m) der Trainingssequenz TSC dem Funkempfänger bekannt. Des Weiteren ist der Phasenwinkel Φ bei einem vorgegebenen Modulationsverfahren konstant und ebenfalls bekannt. Aus diesen Informationen müssen durch Gleichung (8) die zurückgedrehten Kanalparameter $h_i$ und die zurückgedrehte DC-Störung d errechnet werden.
Nach dem vorstehend zitierten Verfahren von B. Lindoff lassen sich die zurückgedrehte DC-Störung d und die zurückgedrehten Kanalparameter $h_i$ der Trainingssequenz TSC durch ein Least-Squares-Verfahren bestimmen. Dazu muss nach Vorschrift (10) die Summe über die quadratischen Fehler minimiert werden:

$$\min \cdot \sum_{k=L}^{M-1} \left| x(p + k) - \sum_{i=0}^{L} h_i \cdot t(k - i) - d \cdot e^{-j\Phi k} \right|^2 \tag{10}$$

Nach Gleichungen (11) und (12) lassen sich Vektoren $\underline{h}$ und $\underline{w}$ definieren:

$$\underline{h} = \begin{bmatrix} h_0 \\ h_1 \\ \vdots \\ h_L \end{bmatrix} \tag{11}$$

$$\underline{w} = \begin{bmatrix} \underline{h} \\ d \end{bmatrix} \tag{12}$$

Der Vektor $\underline{h}$ beinhaltet als Komponenten die zurückgedrehten Kanalparameter $h_i$ und weist eine Dimension von L+1 auf. Der Vektor $\underline{w}$ beinhaltet neben dem Vektor $\underline{h}$ die zurückgedrehte DC-Störung d und hat eine Dimension von L+2.
Des Weiteren lassen sich durch Gleichungen (13) und (14) Vektoren $\underline{x}$ und $\underline{a}$ definieren:

$$\underline{x} = \begin{bmatrix} x(p+L) \\ x(p+L+1) \\ \vdots \\ x(p+M-1) \end{bmatrix} \tag{13}$$

$$\underline{a} = \begin{bmatrix} e^{-j\Phi L} \\ e^{-j\Phi(L+1)} \\ \vdots \\ e^{-j\Phi(M-1)} \end{bmatrix} \tag{14}$$

Die Vektoren $\underline{x}$ und $\underline{a}$ besitzen jeweils eine Dimension von M-L. Matrizen **T** und **A** werden ebenfalls definiert:

$$\mathbf{T} = \begin{bmatrix} t(L) & t(L-1) & \cdots & t(0) \\ t(L+1) & t(L) & \cdots & t(1) \\ \vdots & \vdots & \ddots & \vdots \\ t(M-1) & t(M-2) & \cdots & t(M-L-1) \end{bmatrix} \tag{15}$$

$$A = [T \; \underline{a}] \tag{16}$$

Die Matrix **T** besitzt eine Dimension von $(M-L)\times(L+1)$ und die Matrix **A** eine Dimension von $(M-L)\times(L+2)$. Aus den vorstehenden Gleichungen ergibt sich als Lösung der Least-Squares-Abschätzung für den Vektor $\underline{w}$ ein Vektor $\underline{\hat{w}}$ gemäß folgender Gleichung:

$$\underline{\hat{w}} = (A^H A)^{-1} \cdot (A^H \underline{x}) \tag{17}$$

Die Matrix $A^H$ bezeichnet die hermitesch transponierte Matrix zu der Matrix **A**, wobei die Matrix $A^H$ aus der Matrix **A** durch Transponierung und komplexe Konjugation hervorgeht. Die Matrix $(A^H A)^{-1}$ ist die inverse Matrix zu der Matrix $A^H A$.

Ein solches Verfahren zur Kanalschätzung mittels eines Least-Squares-Verfahrens wird auch in dem Buch "Nachrichtenübertragung" von K. D. Kammeyer, Teubner Stuttgart, 1996, 2. Auflage, insbesondere im Abschnitt 14.6.3 auf Seiten 588-592, beschrieben. Dieser Abschnitt wird hiermit in den Offenbarungsgehalt der vorliegenden Patentanmeldung mitaufgenommen.

In der Praxis ist es notwendig, auch die Signalleistung $P_s$ und die Rauschleitung $P_n$ abzuschätzen, um daraus das Signalzu-Rausch-Verhältnis ableiten zu können. Ausgehend von der Least-Squares-Abschätzung $\underline{\hat{x}}$ für den Vektor $\underline{x}$, welche durch

$$\underline{\hat{x}} = A \cdot \underline{\hat{w}} \tag{18}$$

gegeben ist, lassen sich die Signalleistung $P_s$ und die Rauschleistung $P_n$ folgendermaßen bestimmen:

$$P_s = \left\| \underline{\hat{x}} \right\|^2 \tag{19}$$

$$P_n = \left\| \hat{\underline{x}} \right\|^2 - P_s \tag{20}$$

In der nachfolgenden Tabelle sind der Speicherbedarf und der Rechenaufwand für das soeben vorgestellte Verfahren nach B. Lindoff dargestellt. Im Sinne einer effizienten Implementierung kann davon ausgegangen werden, dass die Matrix $(\mathbf{A}^H\mathbf{A})^{-1}$ für jede Trainingssequenz TSC vorab berechnet wird und in einem Festwertspeicher abgelegt ist. Da die Matrix $(\mathbf{A}^H\mathbf{A})^{-1}$ eine Anzahl von $(L+2)^2$ komplexen Elementen aufweist, werden $2(L+2)^2$ Speicherwörter benötigt.

| Speicherbedarf $(\mathbf{A}^H\mathbf{A})^{-1}$ | Anzahl der Speicherwörter $2(L+2)^2$ |
|---|---|
| Rechenaufwand | Anzahl der Multiplikationen zweier reeller Zahlen |
| a) $\underline{A}_{\hat{x}} = \mathbf{A}^H \cdot \underline{x}$ | $2\,(M\text{-}L)\,(L+1)+4\,(M\text{-}L)$ |
| b) $\underline{\hat{w}} = (\mathbf{A}^H\mathbf{A})^{-1} \cdot \underline{A}_{\hat{x}}$ | $4(L+2)^2$ |
| c) $\underline{\hat{x}} = \mathbf{A} \cdot \underline{\hat{w}}$ | $2(M\text{-}L)(L+1)+4\,(M\text{-}L)$ |
| d) $P_s = \left\|\underline{\hat{x}}\right\|^2$ | $2\,(M\text{-}L)$ |
| e) $P_n = \left\|\underline{x}\right\|^2 - P_s$ | $2\,(M\text{-}L)$ |
| Insgesamt | $4(M\text{-}L)(L+4)+4(L+2)^2$ |

Im unteren Teil der vorstehenden Tabelle sind alle Verfahrensschritte des Verfahrens nach B. Lindoff aufgeführt. Jedem Verfahrensschritt ist der dafür benötigte Rechenaufwand gegenübergestellt. Der Rechenaufwand lässt sich an der benötigten Anzahl der Multiplikationen zweier reeller Zahlen ablesen. Eine Multiplikation zweier komplexer Zahlen entspricht vier Multiplikationen zweier reeller Zahlen. Eine Multiplikation einer reellen Zahl mit einer komplexen Zahl entspricht zwei Multiplikationen zweier reeller Zahlen.

In Fig. 4 ist das erfindungsgemäße Verfahren schematisch dargestellt. Die Grundidee des erfindungsgemäßen Verfahrens ist es, die gemeinsame Abschätzung der zurückgedrehten DC-Störung d und der zurückgedrehten Kanalparameter $h_i$ in zwei Schritte zu unterteilen. In einem ersten Schritt wird eine Kanalschätzung nach einem Least-Squares-Verfahren durchgeführt, bei welchem angenommen wird, dass die DC-Störung gleich Null sei. In diesem Fall muss der nachfolgende Term minimiert werden:

$$\sum_{k=L}^{M-1} \left| \ddot{x}(p+k) - \sum_{i=0}^{L} h_i \cdot t(k-i) \right|^2 \tag{21}$$

Die Lösung dieser Least-Squares-Abschätzung ist durch einen Vektor $\hat{\underline{h}}$ nach folgender Gleichung gegeben:

$$\hat{\underline{h}} = \begin{bmatrix} \hat{h}_0 \\ \hat{h}_1 \\ \vdots \\ \hat{h}_L \end{bmatrix} = (\mathbf{T}^T\mathbf{T})^{-1} \cdot (\mathbf{T}^T\underline{x}) \tag{22}$$

Der Vektor $\hat{\underline{h}}$ enthält in seinen Komponenten die mittels des Least-Squares-Verfahrens berechneten Lösungen $h_i$ (mit $i = 0, 1,..., L$) für die zurückgedrehten Kanalparameter hi. Die Matrix $\mathbf{T}^T$ bezeichnet die transponierte Matrix zu der Matrix $\mathbf{T}$. Der Vektor $\underline{x}$ und die Matrix $\mathbf{T}$ sind durch die Gleichungen (13) und (15) definiert. Im Gegensatz zu dem Verfahren nach B. Lindoff, bei welchem die Matrix $(\mathbf{A}^H\mathbf{A})^{-1}$ komplex ist, ist bei dem erfindungsgemäßen Verfahren die Matrix $(\mathbf{T}^T\mathbf{T})^{-1}$ reell und weist $(L+1)^2$ Elemente auf. Dieses vereinfacht die Speicherung dieser Matrix und verringert den Rechenaufwand. Die Matrix $(\mathbf{T}^T\mathbf{T})^{-1}$ wird vorteilhafterweise vorab berechnet und gespeichert.

Des Weiteren werden in dem ersten Schritt des erfindungsgemäßen Verfahrens die Signalleistung $P_s$ und die Rauschleistung $P_n$ nach Gleichungen (23) und (24) berechnet:

$$P_s = Re(\underline{\hat{h}}^H \cdot \underline{T}_x) \tag{23}$$

$$P_n = \|\underline{x}\|^2 - P_s \tag{24}$$

In einem zweiten Schritt des erfindungsgemäßen Verfahrens wird die DC-Störung berücksichtigt. Dabei stellt es sich heraus, dass sich aufgrund der Berechnungen im ersten Schritt des erfindungsgemäßen Verfahrens einfache Gleichungen für die Abschätzung der DC-Störung und die Kanalschätzung ergeben.

Für den zweiten Schritt des erfindungsgemäßen Verfahrens werden vorteilhafterweise vorab ein Parameter $\alpha$ und ein komplexer Vektor $\underline{g}$ nach Gleichungen (25) und (26) berechnet und gespeichert:

$$\alpha = \frac{1}{\|\underline{a}\|^2 - \underline{a}^H T (T^T T)^{-1} T^T \underline{a}} \tag{25}$$

$$\underline{g} = (T^T T)^{-1} T^T \underline{a} \tag{26}$$

Die Berechnungen des Parameters $\alpha$ und des komplexen Vektors $\underline{g}$ sind im Funkempfänger vor dem Ablauf des erfindungsgemäßen Verfahrens bereits möglich, da dem Funkempfänger der Vektor $\underline{a}$ und die Matrix **T** aufgrund der Kenntnis der Trainingssequenz TSC bekannt sind.

Anschließend können in dem zweiten Schritt des erfindungsgemäßen Verfahrens die Fehler berechnet werden, die im ersten Schritt des erfindungsgemäßen Verfahrens wegen der Vernachlässigung der DC-Störung in Kauf genommen wurden. Daraus ergeben sich eine Abschätzung $\hat{d}$ für die zurückgedrehte DC-Störung d sowie ein korrigierter Vektor $\underline{h}_j$ für den Vektor $\underline{h}$, eine korrigierte Signalleistung $P_{s,j}$ und eine korrigierte Rauschleistung $P_{n,j}$:

$$\hat{d} = \alpha \cdot \beta \tag{27}$$

$$\underline{\hat{h}}_j = \underline{\hat{h}} - \hat{d} \cdot \underline{g} \tag{28}$$

$$P_{s,j} = P_s + \gamma \tag{29}$$

$$P_{n,j} = P_n - \gamma \tag{30}$$

In Gleichung (27) bezeichnet $\beta$ einen Parameter, der sich aus folgender Gleichung ergibt:

$$\beta = \underline{a}^H \cdot \underline{x} - \underline{g}^H \cdot \underline{T}_x \tag{31}$$

In der nachstehenden Tabelle sind der Speicherbedarf und der Rechenaufwand des erfindungsgemäßen Verfahrens zusammengefasst.

| Speicherbedarf | Anzahl der Speicherwörter |
|---|---|
| a) $(T^T T)^{-1}$<br>b) $\alpha = 1 / (\|\underline{a}\|^2 - \underline{a}^H T (T^T T)^{-1} T^T \underline{a})$<br>c) $\underline{g} = (T^T T)^{-1} T^T \underline{a}$<br>Insgesamt | $(L+1)^2$<br>1<br>$2(L+1)$<br>$(L+2)^2$ |
| Rechenaufwand | Anzahl der Multiplikationen zweier reeller Zahlen |
| Least-Squares-Kanalschätzung unter Vernachlässigung der DC-Störung | |
| a) $\underline{T}_x = T^T \cdot \underline{x}$ | $2(M-L)(L+1)$ |

(fortgesetzt)

| Rechenaufwand | Anzahl der Multiplikationen zweier reeller Zahlen |
|---|---|
| Least-Squares-Kanalschätzung unter Vernachlässigung der DC-Störung | |
| b) $\underline{\hat{h}} = (T^TT)^{-1} \cdot \underline{T}_x$ | $2(L+1)^2$ |
| c) $P_s = Re(\underline{\hat{h}}^H \cdot \underline{T}_x)$ | $2(L+1)$ |
| d) $P_n = \|\underline{x}\|^2 - P_s$ | $2(M-L)$ |
| Korrektur der Least-Squares-Kanalschätzung unter Berücksichtigung der DC-Störung | |
| e) $\hat{\beta} = \underline{a}^H \cdot \underline{x} - \underline{g}^H \cdot \underline{T}_x$ | $4(M-L)+4(L+1)$ |
| f) $\hat{d} = \hat{\alpha} \cdot \hat{\beta}$ | 2 |
| g) $\underline{h}_j = \underline{\hat{h}} - \hat{d} \cdot \underline{g}$ | $4(L+1)$ |
| h) $\gamma = Re(d \cdot \beta^*)$ | 2 |
| i) $P_{s,j} = P_s + \gamma$ | 0 |
| j) $P_{n,j} = P_n - \gamma$ | 0 |
| Insgesamt | $2(M+1)(L+2)+4(M+L+3)$ |

Ein Vergleich des erfindungsgemäßen Verfahrens mit dem Verfahren nach B. Lindoff ergibt, dass bei einer Anzahl M der Datensymbole t(m) der Trainingssequenz TSC von 26 und einer Kanalordnung L von 5 oder 6 das erfindungsgemäße Verfahren 50% weniger Speicherbedarf aufweist und 46% weniger Rechenaufwand benötigt.

**Patentansprüche**

1. Verfahren zur Abschätzung einer DC-Störung und zur Kanalschätzung in einem digitalen Basisbandsignal eines Funkempfängers, bei welchem

   - von dem Funkempfänger Datenbursts (DB) empfangen werden, welche zuvor von einem Funksender ausgesendet wurden und welche K Datensymbole (DATA1, TSC, DATA2) enthalten,
   - von dem Funksender ausgesandte Datensymbole gedrehte Datensymbole $\tilde{s}$ (k) sind, die aus ursprünglichen Datensymbolen s(k) durch Drehung um einen Phasenwinkel Φ hervorgehen,

   wobei die Beziehung besteht:

   $$\tilde{s}(k) = s(k) \cdot e^{j\Phi k} \qquad \text{mit } k = 0, 1, ..., K-1,$$

   - von dem Funkempfänger empfangene Datensymbole $\tilde{x}$ (k) durch Zurückdrehung um den Phasenwinkel Φ in Datensymbole x(k) mittels der Beziehung

   $$x(k) = \tilde{x}(k) \cdot e^{-j\Phi k} \qquad \text{mit } k = 0, 1, ..., K-1.$$

   transformiert werden,
   - die von dem Funkempfänger empfangenen Datensymbole $\tilde{x}$ (k) durch

   $$\tilde{x}(k) = \sum_{i=0}^{L} \tilde{h}_i \cdot \tilde{s}(k-i) + \tilde{d} + \tilde{n}(k) \quad \text{mit } k = 0, 1, ..., K-1$$

   bestimmt sind, wobei $\tilde{h}_i$ Kanalparameter, L eine Kanalordnung, $\tilde{d}$ die DC-Störung und ñ(k) ein additiver Rauschanteil sind,

- ein von dem Funksender auszusendender Datenburst (DB) M Datensymbole $t(m)$ mit $m = 0, 1,..., M-1$ einer dem Empfänger bekannten Trainingssequenz (TSC) enthält, wobei $t(m)$ die Datensymbole der Trainingssequenz (TSC) vor der Modulation bezeichnet und die Datensymbole $t(m)$ in dem Datenburst (DB) auf p der K Datensymbole $s(k)$ (DATA1) des Datenbursts (DB) folgen und die Datensymbole $t(m)$ dem Funkempfänger bekannt sind,

- sich aus der DC-Störung $\tilde{d}$ mittels

$$d' = \tilde{d} \cdot e^{-j\Phi_p}$$

eine zurückgedrehte DC-Störung d ergibt,

- ein Vektor $\underline{x}$ durch

$$\underline{x} = \begin{bmatrix} x(p + L) \\ x(p + L + 1) \\ \vdots \\ x(p + M - 1) \end{bmatrix}$$

definiert ist, und

- eine Matrix T durch

$$T = \begin{bmatrix} t(L) & t(L-1) & \cdots & t(0) \\ t(L+1) & t(L) & \cdots & t(1) \\ \vdots & \vdots & \ddots & \vdots \\ t(M-1) & t(M-2) & \cdots & t(M-L-1) \end{bmatrix}$$

definiert ist,

- ein Vektor a durch

$$a = \begin{bmatrix} e^{-j\Phi L} \\ e^{-j\Phi(L+1)} \\ \vdots \\ e^{-j\Phi(M-1)} \end{bmatrix}$$

definiert ist,

- ein Parameter $\alpha$ durch

$$\alpha = \frac{1}{\|\underline{a}\|^2 - \underline{a}^H T (T^T T)^{-1} T^T \underline{a}}$$

definiert ist, und

- ein Vektor $\underline{g}$ durch

$$\underline{g} = (T^T T)^{-1} T^T \underline{a}$$

definiert ist,

wobei die Matrix T, der Parameter $\alpha$ und der Vektor g vorab berechnet und gespeichert werden, und welches Verfahren folgende Schritte umfasst:

(a) Berechnen eines Vektors $\hat{\underline{h}}$ von Kanalparametern zur Kanalschätzung mittels eines Least-Squares-Verfahrens, wobei die dem Funkempfänger bekannte Trainingssequenz (TSC) verwendet wird und die DC-Störung vernachlässigt wird; und

(b) Durchführen der Abschätzung der DC-Störung und der Kanalschätzung, wobei für die Kanalschätzung unter Berücksichtigung der DC-Störung Korrekturterme für die im Schritt (a) errechneten Kanalparameter berechnet werden, mit folgenden Teilschritten:

(b1) Berechnen eines Parameters $\beta$ mittels

$$\beta = \underline{a}^H \cdot \underline{x} - \underline{g}^H \cdot \underline{T}_x, \text{ wobei } \underline{T}_x = T^T \cdot \underline{x}$$

ist,

(b2) Berechnen einer Abschätzung $\hat{d}$ für die zurückgedrehte DC-Störung d mittels

$$\hat{d} = \alpha \cdot \beta,$$

und

(b3) Berechnen eines Vektors $\hat{\underline{h}}_j$ als korrigierte Lösung des im Schritt (a) berechneten Vektors $\hat{\underline{h}}$ mittels

$$\hat{\underline{h}}_j = \hat{\underline{h}} - \hat{d} \cdot \hat{\underline{g}}.$$

2. Verfahren nach Anspruch 1,
   **dadurch gekennzeichnet,**

   - **dass** im Schritt (a) ein Vektor $\hat{\underline{h}}$ mittels

$$\hat{\underline{h}} = \begin{bmatrix} \hat{h}_0 \\ \hat{h}_1 \\ \vdots \\ \hat{h}_L \end{bmatrix} = (T^T T)^{-1} \cdot \underline{T}_x$$

berechnet wird, welcher die mittels des Least-Squares-Verfahrens berechneten Lösungen $\hat{h}_i$ mit i = 0, 1,..., L für die zurückgedrehten Kanalparameter $h_i = \hat{h}_i \cdot e^{-j\Phi_i}$ enthält.

3. Verfahren nach Anspruch 1 oder 2,
   **dadurch gekennzeichnet,**

   - **dass** nach dem Schritt (a) folgende Teilschritte ausgeführt werden:

   (a1) Berechnen einer Signalleistung $P_s$ mittels

$$P_s = \text{Re}\,(\hat{\underline{h}}^H \cdot \underline{T}_x),$$

   und
   (a2) Berechnen einer Rauschleistung $P_n$ mittels

$$P_n = \cdot \|\underline{x}\|^2 - P_s.$$

**4.** Verfahren nach einem der vorhergehenden Ansprüche,
**dadurch gekennzeichnet,**

- **dass** der Schritt (b) folgende, dem Teilschritt (b3) nachfolgende Teilschritte aufweist:

(b4) Berechnen eines Parameters y mittels

$$\gamma = Re(\hat{d} \cdot \beta^*),$$

(b5) Berechnen einer korrigierten Signalleistung $P_{s,j}$ mittels

$$P_{s,j} = P_s + \gamma,$$

und
(b6) Berechnen einer korrigierten Rauschleistung $P_{n,j}$ mittels

$$P_{n,j} = P_n - \gamma.$$

**5.** Verfahren nach einem oder mehreren der vorhergehenden Ansprüche,
**dadurch gekennzeichnet,**

- **dass** das Verfahren bei einem GMSK-Verfahren oder bei einem 8-PSK-Verfahren eingesetzt wird.

**Claims**

**1.** Method for estimation of DC interference and for channel estimation in a digital baseband signal in a radio receiver, in which

- the radio receiver receives data bursts (DB) which have previously been transmitted by a radio transmitter and which contain K data symbols (DATA1, TSC, DATA2),
- data symbols which are transmitted by the radio transmitter are rotated data symbols $\tilde{s}(k)$ which are obtained from original data symbols s(k) by rotation through a phase angle $\Phi$, subject to the following relationship:

$$\tilde{s}(k) = s(k) \cdot e^{j\Phi k} \qquad \text{where } k = 0, 1, ..., K-1,$$

- data symbols $\tilde{x}(k)$ which are received by the radio receiver are transformed by rotation back through the phase angle $\Phi$ to data symbols x(k) using the relationship:

$$x(k) = \tilde{x}(k) \cdot e^{-j\Phi k} \qquad \text{where } k = 0, 1, ..., K-1,$$

- the data symbols $\tilde{x}(k)$ which are received by the radio receiver are determined by

$$\tilde{x}(k) = \sum_{i=0}^{L} \tilde{L}_i \cdot \tilde{s}(k-i) + \tilde{d} + \tilde{n}(k) \text{ where } k = 0, 1, \ldots, K-1$$

where $\tilde{h}_i$ is a channel parameter, L is a channel arrangement, $\tilde{d}$ is the DC interference and ñ(k) is an additive noise component,

- a data burst (DB) to be transmitted by the radio transmitter contains M data symbols t(m) where m = 0, 1, ..., M-1 in a training sequence (TSC) which is known to the receiver, with t(m) being the data symbols in the training sequence (TSC) before modulation, and the data symbols t(m) in the data burst (DB) following p of the K data symbols s(k) (DATA 1) in the data burst (DB), and the data symbols t(m) being known to the radio receiver,

- DC interference d which has been rotated back being obtained from the DC interference $\tilde{d}$ by means of

$$d = \tilde{d} \cdot e^{-j\Phi k}$$

- a vector $\underline{x}$ being defined by

$$\underline{x} = \begin{bmatrix} x(p+L) \\ x(p+L+1) \\ \vdots \\ x(p+M-1) \end{bmatrix},$$

and
- a matrix T being defined by

$$T = \begin{bmatrix} t(L) & t(L-1) & \cdots & t(0) \\ t(L+1) & t(L) & \cdots & t(1) \\ \vdots & \vdots & \ddots & \vdots \\ t(M-1) & t(M-2) & \cdots & t(M-L-1) \end{bmatrix}$$

- a vector $\underline{a}$ being defined by

$$\underline{a} = \begin{bmatrix} e^{-j\phi L} \\ e^{-j\phi(L+1)} \\ \vdots \\ e^{-j\phi(M-1)} \end{bmatrix}$$

- a parameter $\alpha$ being defined by

$$\alpha = \frac{1}{\|a\|^2 - a^H T (T^T T)^{-1} T^T \underline{a}}$$

and
- a vector $\underline{g}$ being defined by

$$\underline{g} = (T^T T)^{-1} T^T \underline{a}$$

where the matrix T, parameter $\alpha$ and the vector g are calculated and stored in advance,
and which method comprises the following steps:

(a) Calculation of a vector $\underline{h}$ of channel parameters for channel estimation by means of a Least Squares method, using the training sequence (TSC) which is known to the radio receiver and ignoring the DC interference; and
(b) Carrying out the DC interference estimation and the channel estimation, with correction terms for the channel parameters calculated in step (a) being calculated for channel estimation, taking into account the DC interference, with the following step elements:

(b1) Calculation of a parameter $\beta$ by means of

$$\beta = \underline{a}^H \cdot \underline{x} - \underline{g}^H \cdot \underline{T}_x,$$

where $\underline{T}_x = T^T \cdot \underline{x}$
(b2) Calculation of an estimate $\hat{d}$ of the DC interference d which has been rotated back by means of

$$\hat{d} = \alpha \cdot \beta,$$

and
(b3) Calculation of a vector $\hat{h}_j$ as a corrected solution for the vector $\hat{h}$ calculated in step (a), by means of

$$\hat{h}_j = \hat{h} - \hat{d} \cdot \underline{g}.$$

2. Method according to Claim 1,
**characterized**

- **in that** a vector $\underline{\hat{h}}$ is calculated in step (a) by means of

$$\underline{\hat{h}} = \begin{bmatrix} \hat{h}_0 \\ \hat{h}_1 \\ \vdots \\ \hat{h}_L \end{bmatrix} = (T^T T)^{-L} \cdot \underline{T}_x$$

which includes the solutions $\hat{h}_i$ where i = 0, 1, ..., L calculated by means of the Least Squares method for the channel parameters $h_i = \tilde{h}_i \cdot e^{-j\Phi i}$ which have been rotated back.

3. Method according to Claim 1 or 2,
**characterized**

- **in that** the following step elements are carried out after the step (a):

(a1) Calculation of a signal power $P_s$ by means of

$$P_s = \mathrm{Re}(\hat{h}^H \cdot \underline{T}_x)$$

and

(a2) Calculation of a noise power $P_n$ by means of

$$P_n = \|\underline{x}\|^2 - P_s.$$

**4.** Method according to one of the preceding claims, **characterized**

- **in that** step (b) has the following step elements following the step element (b3):

      (b4) Calculation of a parameter $\gamma$ by means of

$$\gamma = \mathrm{Re}(\hat{d} \cdot \beta^*),$$

      (b5) Calculation of a corrected signalled power $P_{s,j}$ by means of

$$P_{s,j} = P_s + \gamma,$$

      and
      (b6) Calculation of a corrected noise power $P_{n,j}$ by means of

$$P_{n,j} = P_n - \gamma.$$

**5.** Method according to one or more of the preceding claims, **characterized**

- **in that** the method is used for an GMSK method or for an 8-PSK method.

**Revendications**

**1.** Procédé d'évaluation d'une perturbation en courant continu et d'évaluation de canal dans un signal de bande de base numérique d'un récepteur radio, dans lequel

- on reçoit du récepteur radio des rafales (DB) de données, qui ont été émises auparavant par un émetteur radio et qui contiennent K symboles (DATA1, TSC, DATA2) de données,
- des symboles de données émis par l'émetteur radio sont des symboles $\tilde{s}(k)$ de données tournées, qui proviennent de symboles s(k) de données initiales par rotation d'un angle $\Phi$ de phase en ayant la relation :

$$\tilde{s}(k) = s(k) \cdot e^{j\Phi k} \qquad \text{avec } k = 0, 1, \ldots, K-1,$$

- on transforme des symboles $\tilde{x}(k)$ de données reçues du récepteur radio par rotation contraire de l'angle $\Phi$ de phase en des symboles x(k) de données au moyen de la relation

$$x(k) = \tilde{x}(k) \cdot e^{-j\Phi k} \qquad \text{avec } k = 0, 1, \ldots, K-1,$$

- on détermine les symboles $\tilde{x}(k)$ de données reçues par le récepteur radio par

$$\tilde{x}(k) = \sum_{i=0}^{L} \tilde{h}_i \cdot \tilde{s}(k - i) + \tilde{d} + \tilde{n}(k) \quad \text{avec } k = 0, 1, ..., K\text{-}1$$

$\tilde{h}_i$ étant le paramètre de canal, L étant un ordre de canal, d étant la perturbation en courant continu et ñ(k) étant une proportion additive de bruit,

- une rafale (DB) de données émises par l'émetteur radio contient M symbole t(m) de données avec m = 0, 1, ..., M-1 d'une séquence (TSC) d'entraînement connue du récepteur, t(m) désignant les symboles de données de la séquence (TSC) d'entraînement avant la modulation et les symboles t(m) de données dans la rafale (DB) de données suivant p des K symboles s(k) (DATA1) de données de la rafale (DB) de données et les symboles t(m) de données étant connus du récepteur radio,

- on obtient une perturbation $\tilde{d}$ en courant continu tournée en sens contraire à partir de la perturbation $\tilde{d}$ en courant continu au moyen de

$$d = \tilde{d} \cdot e^{-j\Phi p}$$

- on définit un vecteur $\underline{x}$ par

$$\underline{x} = \begin{bmatrix} x(p + L) \\ x(p + L + 1) \\ \vdots \\ x(p + M - 1) \end{bmatrix}$$

et
- on définit une matrice T par

$$T = \begin{bmatrix} t(L) & t(L - 1) & \cdots & t(0) \\ t(L + 1) & t(L) & \cdots & t(1) \\ \vdots & \vdots & \ddots & \vdots \\ t(M - 1) & t(M - 2) & \cdots & t(M - L - 1) \end{bmatrix}$$

- on définit un vecteur $\underline{a}$ par

$$a = \begin{bmatrix} e^{-j\Phi L} \\ e^{-j\Phi(L+1)} \\ \vdots \\ e^{-j\Phi(M-1)} \end{bmatrix}$$

- on définit un paramètre $\alpha$ par

$$\alpha = \frac{1}{\|\underline{a}\|^2 - \underline{a}^H T (T^T T)^{-1} T^T \underline{a}}$$

et
- un vecteur g par

$$\underline{g} = (T^T T)^{-1} T^T \underline{a}$$

la matrice T, le paramètre $\alpha$ et le vecteur g étant calculés à l'avance et mémorisés,

et le procédé comprenant les stades suivants :

(a) on calcule un vecteur $\hat{\underline{h}}$ de paramètres de canal pour l'évaluation de canal au moyen du procédé des moindres carrés en utilisant la séquence (TSC) d'entraînement connue du récepteur radio et en négligeant la perturbation en courant continu ; et

(b) on effectue l'évaluation de la perturbation en courant continu et l'évaluation de canal en calculant, pour l'évaluation de canal, en tenant compte de la perturbation en courant continu, des termes de correction pour les paramètres de canal calculés au stade (a) en effectuant les sous-stades suivants :

(b1) on calcule un paramètre p au moyen de

$$\beta = \underline{a}^H \cdot \underline{x} - \underline{g}^H \cdot \underline{T}_x,$$

dans laquelle $\underline{T}_x = T^T \cdot \underline{x}$.

(b2) on calcule une évaluation d pour la perturbation d en courant continu tournée en sens contraire

$$\hat{d} = \alpha \cdot \beta,$$

et

(b3) on calcule un vecteur $\hat{\underline{h}}_j$ en tant que solution corrigée du vecteur $\hat{\underline{h}}$ calculé au stade (a) au moyen de

$$\hat{\underline{h}}_j = \hat{\underline{h}} - \hat{d} \cdot \underline{g}.$$

**2.** Procédé suivant la revendication 1,
**caractérisé**

- **en ce que** l'on calcule au stade (a) un vecteur $\hat{\underline{h}}$ au moyen de

$$\hat{\underline{h}} = \begin{bmatrix} \hat{h}_0 \\ \hat{h}_1 \\ \vdots \\ \hat{h}_L \end{bmatrix} = (T^T T)^{-1} \cdot \underline{T}_x$$

qui contient les solutions $\hat{h}_i$ avec i = 0, 1, ..., L calculées au moyen du procédé des moindres carrés pour les paramètres $h_i = \hat{h}_i \, e^{-j\Phi_i}$ de canal tournés en sens contraire.

**3.** Procédé suivant la revendication 1 ou 2,
**caractérisé**

- **en ce qu'**après le stade (a) on effectue les sous-stades suivants :

(a1) on calcule une puissance $P_s$ de signal au moyen de

$$P_s = \mathrm{Re}\,(\hat{\underline{h}}^H \cdot T_x),$$

et

(a2) on calcule une puissance $P_n$ de bruit au moyen de

$$P_n = \cdot \left\| \underline{x} \right\|^2 - P_s.$$

4. Procédé suivant l'une des revendications précédentes, **caractérisé en ce que**

- le stade (b) comporte les sous-stades suivants venant après le sous-stade (b3) :

(b4) on calcule un paramètre $\gamma$ au moyen de

$$\gamma = Re(\hat{d} \cdot \beta^*),$$

(b5) on calcule une puissance $P_{s,j}$ corrigée de signal au moyen de

$$P_{s,j} = P_s + \gamma,$$

et
(b6) on calcule une puissance $P_{n,j}$ corrigée de bruit au moyen de

$$P_{n,j} = P_n - \gamma.$$

5. Procédé suivant l'une ou plusieurs des revendications précédentes, **caractérisé en ce que**

- l'on utilise le procédé dans un procédé GMSK ou dans un procédé 8-PSK.

## Fig. 1

(Stand der Technik)

## Fig. 2

(Stand der Technik)

DB

| DATA1 | TSC | DATA2 |
|-------|-----|-------|

$$\longleftarrow p \longrightarrow \longleftarrow M \longrightarrow$$

$$\longleftarrow K \longrightarrow$$

## Fig. 3

$x(k)$        $t(m)$

Berechnung von $\underline{\hat{h}}$ unter
Vernachlässigung der DC - Störung

$\underline{\hat{h}}$        $P_s$        $P_n$

Berechnung von $\hat{d}$ und $\underline{\hat{h}}_j$ unter
Berücksichtigung der DC - Störung

$\hat{d}$    $\underline{\hat{h}}_j$        $P_{s,j}$        $P_{n,j}$

## Fig. 4